# FASCICULE DE BREVET EUROPEEN

(11) **EP 2 714 611 B1**
(45) Date de publication et mention de la délivrance du brevet: **20.05.2020**
(21) Numéro de dépôt: 12731071.2
(22) Date de dépôt: 25.05.2012
(51) Int. Cl.: C03C 25/26, C03C 25/34, C08G 12/00, D06M 13/00, C08L 97/02

(54) **COMPOSITION D'ENCOLLAGE EXEMPTE DE FORMALDEHYDE POUR FIBRES, NOTAMMENT MINERALES, ET PRODUITS RESULTANTS**
FORMALDEHYDFREIE SCHLICHTUNGSZUSAMMENSETZUNG FÜR FASERN, INSBESONDERE MINERALFASERN, UND DARAUS GEWONNENE PRODUKTE
FORMALDEHYDE-FREE SIZING COMPOSITION FOR FIBRES, IN PARTICULAR MINERAL FIBRES, AND RESULTING PRODUCTS

(30) Priorité: 25.05.2011 FR 1154549
(43) Date de publication de la demande: 09.04.2014
(73) Titulaire: Saint-Gobain Isover, 92400 Courbevoie (FR)
(72) Inventeur: DIDIER, Benoit, 92400 Courbevoie (FR); FOTI, Fabio, 75019 Paris (FR); OBERT, Edouard, 60700 Fleurines (FR); JAFFRENNOU, Boris, 75019 Paris (FR)
(74) Mandataire: Saint-Gobain Recherche
(86) Numéro de dépôt international: PCT/FR2012/051184
(87) Numéro de publication internationale: WO 2012/168621

(56) Documents cités:
- EP-A1- 1 382 642
- WO-A1-2010/139899
- WO-A1-2011/019593
- WO-A1-2011/019598
- DE-A1- 4 308 089

## Description

La présente invention se rapporte au domaine des produits à base de fibres, notamment minérales, liées par un liant exempt de formaldéhyde.

Tout particulièrement, l'invention concerne des produits d'isolation thermique et/ou acoustique, dont les fibres sont sous la forme de laine minérale, notamment de verre ou de roche.

La fabrication de produits d'isolation à base de laine minérale comprend généralement une étape de fabrication de la laine elle-même, qui peut être mise en œuvre par différents procédés, par exemple selon la technique connue du fibrage par centrifugation interne ou externe.

La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées vers un organe récepteur pour former une nappe de fibres (ou laine minérale).

La centrifugation externe consiste, elle, à déverser la matière en fusion à la surface périphérique externe d'organes rotatifs appelés rotors, d'où ladite matière est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on applique sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - une quantité aussi faible que possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, afin éviter la formation de chaînes longues peu hydrosolubles qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée (à son tour dégradée au moins partiellement en ammoniaque) qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues.

Une première solution se fonde sur l'emploi d'un polymère d'acide carboxylique, notamment d'acide acrylique.

Dans US 5 340 868, l'encollage comprend un polymère polycarboxylique, un β-hydroxylamide et un acide carboxylique monomérique au moins trifonctionnel.

D'autres compositions d'encollage ont été proposées qui comprennent un polymère polycarboxylique, un polyol et un catalyseur, lequel catalyseur pouvant être un composé contenant du phosphore (US 5 318 990, US 5 661 213, US 6 331 350, US 2003/0008978), un fluoroborate (US 5 977 232) ou bien un cyanamide, un dicyanamide ou une cyanoguanidine (US 5 932 689).

Les compositions d'encollage à base d'un polymère polycarboxylique et d'un polyol peuvent en outre comprendre un tensioactif cationique, amphotère ou non ionique (US 2002/0188055), un agent de couplage de type silane (US 2004/0002567) ou une dextrine en tant que co-liant (US 2005/0215153).

Il a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Une deuxième solution de remplacement des résols se fonde sur l'association d'un saccharide et d'un acide polycarboxylique.

Dans US 5 895 804, il est décrit une composition adhésive à base de polysaccharides thermoréticulables pouvant être utilisée en tant qu'encollage pour de la laine minérale. La composition renferme un polymère polycarboxylique ayant au moins deux groupes fonctionnels acide carboxylique et un poids moléculaire au moins égal à 1000, et un polysaccharide ayant un poids moléculaire au moins égal à 10000.

Dans WO 2009/080938, la composition d'encollage comprend un monosaccharide et/ou un polysaccharide et un acide organique polycarboxylique de masse molaire inférieure à 1000.

On connaît également une composition d'encollage aqueuse sans formaldéhyde qui comprend un produit de réaction de Maillard, en particulier associant un sucre réducteur, un acide carboxylique et de l'ammoniaque (WO 2007/014236). Dans WO 2009/019232 et WO 2009/019235, il est proposé de substituer l'acide carboxylique par un précurseur d'acide dérivé d'un sel inorganique, notamment un sel d'ammonium qui présente l'avantage supplémentaire de pouvoir remplacer tout ou partie de l'ammoniaque.

Dans WO 2011/019590 et WO 2011/019597, il est décrit un mat isolant à base de fibres de verre utilisable en toiture (« roofing »). Les fibres sont liées par une composition d'encollage qui comprend un sel d'acide inorganique et un aldéhyde ou une cétone. Le sel d'acide inorganique est obtenu par réaction d'un acide inorganique et d'ammoniaque ou d'une polyamine.

Dans WO 2011/019593 et WO 2011/019598, le mat isolant précité est obtenu à partir d'une composition d'encollage qui comprend un amino-amide et un aldéhyde ou une cétone. L'amino-amide est obtenu par réaction d'une amine primaire ou secondaire polyfonctionnelle et d'un réactif saturé ou insaturé tel qu'un acide carboxylique, un anhydride d'acide ou un dérivé (ester ou un sel) de ces composés.

Il existe un besoin de disposer de nouvelles compositions d'encollage sans formaldéhyde qui permettent de fabriquer des produits à base de fibres, notamment minérales, pouvant être utilisés en tant qu'isolants acoustiques et/ou thermiques.

La présente invention a pour but de proposer une alternative aux compositions d'encollage sans formaldéhyde pour fibres, notamment minérales, en particulier se présentant sous la forme de laine de verre ou de roche.

Ce but est atteint par la composition d'encollage conforme à l'invention qui comprend :
- au moins un sucre non réducteur,
- au moins catalyseur de déshydratation du sucre non réducteur,
- au moins une amine,
- et au moins un composé à insaturation(s) éthylénique(s) activée(s).

L'expression « sucre non réducteur » doit être entendue au sens conventionnel, à savoir qu'elle se rapporte à un sucre constitué de plusieurs motifs saccharidiques, deux ou plus, dont le carbone 1 porteur du groupe OH hémiacétalique est engagé dans une liaison. Le sucre non réducteur ne contient pas de groupe aldéhyde ou cétone.

Le sucre non réducteur conforme à la présente invention est un oligoholoside non réducteur renfermant au plus 10 motifs saccharidiques.

A titre d'exemples de tels sucres non réducteurs, on peut citer les diholosides tels que le tréhalose, les isotréhaloses, le saccharose et les isosaccharoses (« isosucroses » en anglais), les triholosides tels que le mélézitose, le gentianose, le raffinose, l'erlose et l'umbelliférose, les tétraholosides tels que le stachyose, et les pentaholosides tels que le verbascose.

On préfère le saccharose et le tréhalose, et mieux encore le saccharose.

Le catalyseur de déshydratation du sucre non réducteur doit permettre la formation d'un système contenant au moins deux liaisons éthyléniques conjuguées. Le produit de déshydratation formé contient des composés insolubles qui réagissent avec la fonction insaturée du composé obtenu par réaction entre l'amine et le composé à insaturation(s) éthylénique(s) activée(s).

Le catalyseur qui convient à cet effet peut être un sel métallique d'acide inorganique, un sel d'ammonium d'acide inorganique ou un mélange de ces sels.

Le sel métallique d'acide inorganique est choisi parmi les sels de métal alcalin, de métal alcalino-terreux, de métal de transition ou de métal pauvre d'acide inorganique. De préférence, il s'agit d'un sel de sodium, de magnésium, de fer, de cobalt, de nickel, de cuivre, de zinc ou d'aluminium, avantageusement de cuivre, de fer" ou d'aluminium.

Le sel métallique d'acide inorganique est avantageusement choisi parmi les sulfates, les chlorures, les nitrates, les phosphates et les carbonates, et mieux encore parmi les sulfates et les chlorures.

On préfère le sulfate de cuivre, le sulfate de fer", le sulfate d'aluminium, le sulfate double d'aluminium et de potassium (ou alun de potassium) et le chlorure d'aluminium, en particulier le sulfate de cuivre et le sulfate d'aluminium.

Le sel d'ammonium d'acide inorganique est choisi parmi les sulfates d'ammonium, notamment l'hydrogénosulfate d'ammonium NH₄HSO₄ et le sulfate d'ammonium (NH₄)₂SO₄, les phosphates d'ammonium, notamment le phosphate monoammonique NH₄H₂PO₄, le phosphate diammonique (NH₄)₂HPO₄ et le phosphate d'ammonium (NH₄)₃PO₄, les nitrates d'ammonium, et les carbonates d'ammonium, notamment le bicarbonate d'ammonium NH₄HCO₃ et le carbonate d'ammonium (NH₄)₂CO₃.

Le sel d'ammonium d'acide inorganique est de préférence choisi parmi les sulfates et les phosphates, avantageusement les sulfates.

Dans la composition d'encollage, la quantité de catalyseur de déshydratation du sucre non réducteur représente 1 à 30 % du poids du sucre non réducteur, de préférence 5 à 25 %, et avantageusement 10 à 20 %.

L'amine conforme à l'invention répond à la formule (I) suivante :

R-A-NHR₁ (I)

dans laquelle
R est égal à H, OH, NHR₁ ou -NR₁,
A représente un groupement alkylène, arylalkylène, arylène ou alkylarylène, éventuellement ramifié, un groupement -CO- ou un groupement de formule (II) suivante : 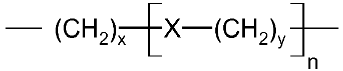 dans laquelle
   X est égal à -O- ou -NR₂-
      avec R₂ est égal à H, -(CH₂)_{z}-NH₂ ou un groupement bivalent -(CH₂)ₜ- qui forme avec un atome d'azote voisin un cycle à 6 atomes,
   x, y, z et t varient de 1 à 5, de préférence x = y = z = t = 2
   n est égal à 1, 2, 3 ou 4,
R₁ est un atome d'hydrogène ou un groupement hydroxyalkyle en C₁ - C₅, de préférence hydroxyéthyle.

A titre d'exemples de telles aminés, on peut citer la monoéthanolamine, la diéthanolamine, l'urée, la diéthylènetriamine (DETA), la triéthylènetétramine (TETA), la tétraéthylènepentamine (TEPA), la pentaéthylènehexamine (PEHA), l'aminoéthyltriéthylènetetramine (AETETA), la N"-(aminoéthyl)tétraéthylènepentamine et la N'-(aminoéthyl)-tétraéthylène-pentamine (AETEPA), la bis-(pipérazine)éthylène (BISPIP), l'aminoéthylpipérazineéthyléthylénediamine (AEPEEDA), la pipérazinéthyldiéthylènetriamine (PEDETA), l'aminoéthyl-pipérazinéthyldiéthylènetriamine (AEPEDETA), la pipérazinéthyltriéthylène-tétramine (PETETA), la tris-(aminoéthyl)aminoéthylpipérazine (TRISAEAEP) et la pipérazinéthylaminoéthyl-diéthylènetriamine (PEAEDETA).

De préférence, l'amine est l'urée, la diéthylènetriamine (DETA), la triéthylènetétramine (TETA), la tétraéthylènepentamine (TEPA) et les mélanges d'amines susmentionnées dans lesquels la TEPA est majoritaire, et avantageusement la TEPA et les mélanges précités.

Par « composé à insaturation(s) éthylénique(s) activée(s) » on entend un composé qui renferme au moins un système de formule (III) suivante :

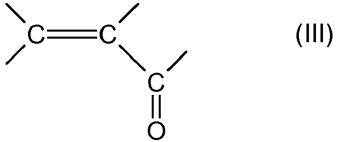

Le composé à insaturation(s) éthylénique(s) activée(s) préféré répond à la formule (IV) suivante : 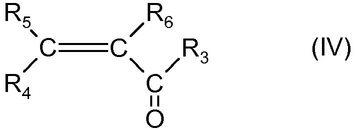 dans laquelle
R₃ représente un atome d'hydrogène, un groupement alkyle en C₁-C₅, de préférence en C₁-C₂, un groupement hydroxyle ou un groupement alcoxy en C₁-C₅, de préférence en C₁-C₂,
R₄ et R₅, identiques ou différents, représentent un atome d'hydrogène, un groupement alkyle en C₁-C₅, de préférence en C₁-C₂, ou un groupement -CO-R₃,
R₆ représente un atome d'hydrogène ou une chaîne hydrocarbonée pouvant renfermer un ou plusieurs hétéroatomes, notamment O, S, N et P, en particulier un radical carboxyalkylène en C₂-C₅, de préférence C₂.

Le composé à insaturation(s) éthylénique(s) activée(s) réagit avec les composés insolubles cités précédemment qui contiennent au moins deux liaisons éthyléniques conjuguées.

Les composés à insaturation(s) éthylénique(s) activée(s) particulièrement préférés sont l'acide acrylique, l'acide méthacrylique, l'acide crotonique, l'acide fumarique, l'acide maléique, l'acide citraconique, l'acide itaconique et les anhydrides de ces acides.

La quantité d'amine dans la composition est telle que le rapport molaire du composé à insaturation(s) éthylénique(s) activée(s) à l'amine varie de 1 à 3,5, de préférence 1,5 à 3 et avantageusement 2 à 2,5.

De la même manière, la quantité de composé à insaturation(s) éthylénique(s) activée(s) dans la composition est telle que le rapport molaire du composé à insaturation(s) éthylénique(s) activée(s) à la somme des motifs saccharidiques constitutifs du sucre non réducteur varie de 0,05 à 1,5, de préférence 0,1 à 1,3 et avantageusement 0,2 à 1,1. Dans le cas présent, on prend comme masse molaire de chaque motif saccharidique la masse molaire de l'ose correspondant.

La composition d'encollage peut comprendre en sus des composés mentionnés, les additifs conventionnels ci-après dans les proportions suivantes calculées sur la base de 100 parts en poids de sucre non réducteur, de catalyseur de déshydratation du sucre non réducteur, d'amine et de composé à insaturation(s) éthylénique(s) activée(s) :
- 0 à 2 parts de silane, en particulier un aminosilane,
- 0 à 20 parts d'huile, de préférence 4 à 15 parts,
- 0 à 5 parts d'un silicone,
- 0 à 30 parts d'un « extendeur ».

Le rôle des additifs est connu et brièvement rappelé : le silane est un agent de couplage entre les fibres et le liant, qui joue également le rôle d'agent anti-vieillissement ; les huiles sont des agents anti-poussières et hydrophobes ; le silicone est un agent hydrophobe qui a pour fonction de réduire l'absorption d'eau par le produit d'isolation ; l'« extendeur » est une charge organique ou inorganique, soluble ou dispersable dans la composition d'encollage qui permet notamment de diminuer le coût de la composition d'encollage. Les composés portant une ou plusieurs fonctions aldéhyde libres, notamment les sucres réducteurs, ne font pas partie des extendeurs.

La composition d'encollage présente un pH qui varie selon la nature du catalyseur de déshydratation et du composé à insaturation(s) éthylénique(s) activée(s) utilisés, mais en général il est au plus égal à 9 et avantageusement varie de 3 à 7.

Les compositions dont le pH est au moins égal à 4 sont avantageusement utilisées pour l'encollage de laine de roche.

Les différents constituants présents dans la composition d'encollage réagissent sous l'effet de la chaleur pour former un réseau polymérique qui constitue le liant final. Lorsque la température augmente, le catalyseur induit une déshydratation du sucre non réducteur qui se traduit par l'apparition d'au moins deux liaisons éthyléniques conjuguées, ces liaisons réagissant avec les autres constituants de la composition d'encollage, notamment avec le composé à insaturation(s) éthylénique(s) activée(s). Sans être liés par une quelconque théorie scientifique, les inventeurs pensent que le réseau polymérique est formé à partir d'un composé insoluble issu de la réaction du sucre non réducteur et du catalyseur, ce composé insoluble ayant au moins deux liaisons éthyléniques conjuguées qui réagissent avec la fonction insaturée du produit de réaction de l'amine et du composé à insaturation(s) éthylénique(s) activée(s), notamment l'acide ou l'anhydride décrit précédemment. Les inventeurs pensent aussi que la réaction de réticulation procède selon un mécanisme différent de celui décrit dans l'art antérieurs (WO 2011/019598) qui requiert la présence d'un groupe aldéhyde ou cétone. On obtient ainsi une réticulation du réseau polymérique permettant d'établir des liaisons entre les fibres minérales, en particulier au niveau des points de jonction des fibres dans de la laine minérale, ce qui confère au produit final une certaine « élasticité » propre à assurer notamment une bonne reprise en épaisseur après le déballage du produit.

La composition d'encollage selon l'invention est destinée à être appliquée sur des fibres qui peuvent être minérales ou organiques, ou encore sur un mélange de fibres minérales et organiques.

Comme déjà indiqué, les fibres minérales peuvent être des fibres de verre, notamment de verre E, C, R ou AR (alcali-résistant), ou des fibres de roche, notamment de basalte (ou wollastonite). Ces fibres peuvent encore être des fibres renfermant plus de 96 % en poids de silice et des fibres de céramique à base d'au moins un oxyde, un nitrure ou d'un carbure de métal ou de métalloïde, ou d'un mélange de ces composés, en particulier d'au moins un oxyde, un nitrure ou un carbure d'aluminium, de zirconium, de titane, de bore ou d'yttrium.

Les fibres organiques peuvent être des fibres synthétiques ou des fibres naturelles.

A titre d'exemples de fibres synthétiques, on peut citer les fibres à base d'une oléfine telle que le polyéthylène et le polypropylène, d'un polytéréphtalate d'alkylène tel que le polytéréphtalate d'éthylène, ou d'un polyester.

A titre d'exemples de fibres naturelles, on peut citer les fibres végétales, notamment de bois, de cellulose, de coton, de noix de coco, de sisal, de chanvre ou de lin, et les fibres animales, notamment la laine.

Comme déjà mentionné, la composition d'encollage est plus particulièrement utilisée en tant que composition d'encollage pour des produits d'isolation thermique et/ou acoustique à base de laine minérale.

De manière classique, la composition d'encollage est appliquée sur les fibres minérales à la sortie du dispositif de fibrage et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température de l'ordre de 100 à 200°C, généralement à une température comparable à celle d'une résine formophénolique classique, notamment supérieure ou égale à 110°C, de préférence inférieure ou égale à 170°C.

Les produits à base de fibres encollées à l'aide de la composition, notamment les produits isolants acoustiques et/ou thermiques obtenus à partir de ces fibres encollées, constituent aussi un objet de la présente invention.

Ces produits se présentent généralement sous la forme d'un matelas, d'un feutre, de panneaux, de blocs, de coquilles ou autres formes moulées à base de laine minérale, de verre ou de roche.

La composition d'encollage peut aussi être utilisée pour fabriquer des voiles (aussi appelés « non-tissés » ou « intissés ») et de tissus enduits ou imprégnés, en particulier à base de fibres minérales telles que des fibres de verre ou de roche.

Les voiles de fibres minérales trouvent leur usage notamment en tant que revêtement de surface de produits d'isolation thermique et/ou acoustique à base de laine minérale ou d'une mousse.

L'invention a encore pour objet un procédé de fabrication d'un produit isolant thermique et/ou acoustique à base de laine minérale ou d'un voile de fibres minérales selon lequel on fabrique la laine minérale ou les fibres minérales, on applique sur ladite laine ou lesdites fibres une composition selon l'invention et on traite ladite laine ou lesdites fibres à une température permettant la réticulation de l'encollage et la formation d'un liant infusible, par exemple dans les conditions thermiques décrites précédemment.

L'application de l'encollage peut être effectuée par tout moyen approprié, par exemple par projection, pulvérisation, atomisation, enduction ou imprégnation.

Les exemples qui suivent permettent d'illustrer l'invention sans toutefois la limiter.

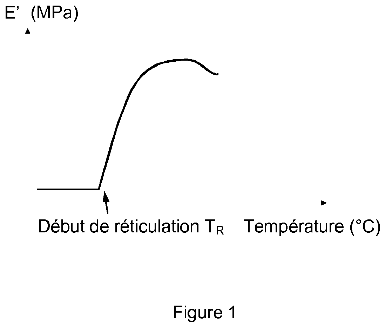

Dans ces exemples, on mesure :
- la température de début de réticulation (T_{R}) par la méthode Dynamic Mechanical Analysis (DMA) qui permet de caractériser le comportement viscoélastique d'un matériau polymérique. On procède comme suit : un échantillon de papier Whatmann est imprégné de la composition d'encollage (teneur en matières solides organiques de l'ordre de 30 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1. On détermine sur la courbe la valeur de température, en °C, de début de réticulation (T_{R}).
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance en traction RT définie par le rapport de la force de rupture F à la masse de l'échantillon (N/g).

La résistance en traction est mesurée après la fabrication (résistance en traction initiale) et après un vieillissement accéléré dans un autoclave à une température de 105°C sous 100 % d'humidité relative pendant 15 minutes (RT15).
- l'épaisseur initiale du produit d'isolation et l'épaisseur après 1 heure et 30 jours sous compression avec un taux de compression (défini comme étant le rapport de l'épaisseur nominale à l'épaisseur sous compression) égal à 4,8/1. Les mesures d'épaisseur permettent d'évaluer la tenue dimensionnelle du produit,
- le coefficient de conductivité thermique λ selon la norme EN 13162, exprimé en W/(m x K),
- la résistance à l'arrachement est mesurée selon la norme NF EN 1607, exprimée en kPa,
- la résistance à la compression est mesurée selon la norme EN 826, exprimée en kPa.

### EXEMPLES 1 A11

On prépare des compositions d'encollage comprenant les constituants figurant dans le tableau 1 exprimés en parts pondérales.
a) on mélange préalablement le composé à insaturation(s) éthylénique(s) activée(s) et l'amine dans un premier récipient, et on laisse le mélange à une température de l'ordre de 20 à 25°C pendant 15 minutes.
b) les compositions d'encollage sont préparées en introduisant, dans un second récipient contenant de l'eau, le sucre non réducteur, le catalyseur de déshydratation et le mélange obtenu sous a) sous agitation jusqu'à dissolution complète des constituants.

On indique également dans le Tableau 1 les performances d'une composition d'encollage contenant 82 parts en poids d'une résine phénol-formaldéhyde-monoéthanolamine (exemple 1 de WO 2008/043960) et 20 parts en poids d'urée (Réf.).

Les exemples 4, 6 et 9 présentent des températures de début de réticulation plus faibles que la référence. Les températures de début de réticulation les plus élevées (exemples 1, 7 et 8) restent cependant acceptables.

Le sulfate d'ammonium (exemple 9) permet de réduire la température de début de réticulation de manière plus efficace que le sulfate de cuivre (exemple 1), d'aluminium (exemple 7) ou de fer" (exemple 8).

### EXEMPLES 12 A 18

Ces exemples illustrent la fabrication de produits isolants sur une ligne industrielle.

On utilise les compositions d'encollage des exemples 1 à 3 et 8 ainsi que l'encollage de référence (Réf.) pour former des produits à base de laine minérale présentant une densité nominale égale à 17,5 kg/m³ et une épaisseur égale à 75 mm. La teneur en liant (encollage réticulé) représente 4,7 % en poids du produit.

On utilise également des compositions d'encollage 4M et 6M ayant la composition donnée respectivement dans les exemples 4 et 6 modifiée en ce que le sulfate de cuivre est remplacé par le sulfate d'ammonium.

On fabrique de la laine de verre sur une ligne pilote par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande de 2,4 m de large équipé de caissons d'aspiration internes qui retiennent la laine minérale sous forme d'une nappe à la surface du convoyeur. La nappe passe en continu dans une étuve maintenue à 270°C où les constituants de l'encollage polymérisent pour former un liant. La quantité de liant représente 4,7 % en poids du produit isolant final.

Les propriétés des produits d'isolation figurent dans le tableau 2.

Les produits utilisant du sulfate d'ammonium (exemples 16 et 17) possèdent les meilleures propriétés.

Le produit de l'exemple 16 est comparable à celui de la référence.

### EXEMPLES 19 A 23

Ces exemples illustrent la fabrication d'autres produits isolants sur une ligne pilote.

On utilise les compositions d'encollage des exemples 4 à 6 et 4M ainsi que l'encollage de référence (Réf.) pour former des produits présentant une densité nominale égale à 10,6 kg/m³ et une épaisseur de 144 mm. La teneur en liant (encollage réticulé) représente 4,7 % en poids du produit.

La laine minérale est obtenue dans les conditions décrites dans les exemples 12 à 18 modifiées en ce que la laine minérale encollée est découpée avant d'être introduite dans une étuve à 210°C pendant 5 minutes, puis la laine minérale est placée à nouveau dans l'étuve, après avoir été retournée sur elle-même, pendant 5 minutes supplémentaires.

Les propriétés des produits d'isolation figurent dans le tableau 3 suivant.

**Tableau 3**

| Exemple | 19 | 20 | 21 | 22 | 23 |
|---|---|---|---|---|---|
| **Composition d'encollage** | Ex. 4 | Ex. 5 | Ex. 6 | 4M | Réf. |
| **Propriétés** | | | | | |
| Résistance en traction (N/g) | | | | | |
| initiale | 2,7 | 2,4 | 2,5 | 2,9 | 3,7 |
| après vieillissement (RT15) | 2,3 | 2,2 | 2,0 | 2,9 | 3,4 |

| Epaisseur (mm) | | | | | |
|---|---|---|---|---|---|
| après 1 heure | 129,7 | 139,1 | 133,8 | 141,4 | 140,8 |
| après 30 jours | 98,3 | n. d. | 96,5 | 101,0 | 107,3 |
| λ (W/(m × K) | 0,033 | 0,033 | 0,033 | 0,033 | 0,034 |

| | | | | | |
|---|---|---|---|---|---|
| n. d. : non déterminé | | | | | |

Le produit utilisant le sulfate d'ammonium (exemple 22) a de meilleures propriétés que celui utilisant du sulfate de cuivre (exemple 19).

### EXEMPLES 24 ET 25

Ces exemples illustrent la fabrication de produits isolants à base de laine de roche sur une ligne industrielle.

On fabrique le produit d'isolation par la technique dite à centrifugation libre dans laquelle la roche à l'état fondu est amenée à la périphérie de roues de centrifugation (trois ou quatre) et est entraînée par ces roues de telle sorte qu'une partie de la roche fondue s'en détache et est transformée en fibres sous l'effet de la force centrifuge. La partie restante, non transformé est renvoyée vers une autre roue ou après la dernière roue retombe sous forme de grenaille. Un courant d'air à la périphérie des roues de centrifugation permet d'assister la formation des fibres par un effet d'étirage, de prendre en charge la matière fibrée en la séparant de la matière infibrée (grenaille) et d'acheminer la matière fibrée vers une bande sans fin munie de caissons d'aspiration qui transporte les fibres en aval de la ligne vers un nappeur, une étuve de polymérisation de la composition d'encollage et de conditionnement du produit.

Le produit final a une densité égale à 90 kg/m3, une épaisseur égale à 52 mm et une teneur en liant représentant 2,5 % du produit.

Le produit de l'exemple 23 utilise la composition d'encollage selon l'exemple 4 et celui de l'exemple 24 utilise la composition de référence (Réf.).

Les propriétés des produits d'isolation figurent ci-après :

| | Ex. 24 | Ex. 25 (comparatif) |
|---|---|---|
| Résistance à l'arrachement (kPa) | 4,0 | 4,9 |
| Résistance à la compression (kPa) | 13,3 | 14,6 |

**Tableau 1**

| Exemple | 1 | 2 | 3 | 4 | 5 | 6 | 7 | 8 | 9 | 10 | 11 | Réf. |
|---|---|---|---|---|---|---|---|---|---|---|---|---|
| **Composition d'encollage** | | | | | | | | | | | | |
| Saccharose | 61,0 | 76,0 | 85,5 | 57,0 | 68,0 | 76,6 | 61,0 | 61,0 | 61,0 | 68,0 | 76,6 | - |
| Sulfate de cuivre | 3,0 | 4,0 | 4,5 | 10,0 | 12,0 | 13,4 | - | - | - | - | - | - |
| Sulfate d'aluminium | - | - | - | - | - | - | 3,0 | - | - | - | - | - |
| Sulfate de fer^{II} | - | - | - | - | - | - | - | 3,0 | - | 12,0 | 13,4 | - |
| Sulfate d'ammonium | - | - | - | - | - | - | - | - | 3,0 | - | - | - |
| Tetraéthylènepentamine (TEPA)⁽¹⁾ | 17,6 | 9,8 | 4,9 | 16,2 | 9,8 | 4,9 | 17,6 | 17,6 | 17,6 | 9,8 | 4,9 | - |
| Anhydride maléique | 18,4 | 10,2 | 5,1 | 16,8 | 10,2 | 5,1 | 18,4 | 18,4 | 18,4 | 10,2 | 5,1 | - |

| **Propriétés** | | | | | | | | | | | | |
|---|---|---|---|---|---|---|---|---|---|---|---|---|
| Temp. début réticulation T_{R} (°C) | 175 | 169 | 162 | 149 | 157 | 143 | 177 | 175 | 129 | 167 | 164 | 151 |
| pH⁽²⁾ | 4,2 | 3,6 | 3,5 | n. d. | n. d. | n. d. | 5,2 | 4,9 | 5,7 | n. d. | n. d. | 6,0 |

| | | | | | | | | | | | | |
|---|---|---|---|---|---|---|---|---|---|---|---|---|
| ⁽¹⁾commercialisé par Hunstman (mélange TEPA (majoritaire), AETETA, AEPEEDA, PEDETA et BISPIP) ⁽²⁾teneur en matières solides : 30 % n.d. : non déterminé | | | | | | | | | | | | |

**Tableau 2**

| Exemple | 12 | 13 | 14 | 15 | 16 | 17 | 18 (comparatif) |
|---|---|---|---|---|---|---|---|
| **Composition d'encollage** | Ex 1 | Ex.4 | Ex. 6 | Ex. 8 | 4M | 6M | Réf. |
| **Propriétés** | | | | | | | |
| Résistance en traction (N/g) | | | | | | | |
| initiale | 3,8 | 3,8 | 3,4 | 3,7 | 4,1 | 3,8 | 4,3 |
| après vieillissement (RT15) | 3,8 | 3,2 | 2,8 | 3,6 | 3,9 | 3,6 | 3,8 |

| Epaisseur (mm) | | | | | | | |
|---|---|---|---|---|---|---|---|
| après 1 heure | 78,1 | 79,3 | 80,4 | 78,9 | 79,7 | 79,8 | 82,5 |
| après 30 jours | 75,3 | 70,7 | 73,0 | 75,0 | 70,5 | 71,0 | 77,2 |
| λ (W/(m x K) | 0,033 | 0,034 | 0,033 | 0,033 | 0,032 | 0,033 | 0,034 |

## Revendications

1. Composition d'encollage exempte de formaldéhyde pour des fibres, notamment minérales, **caractérisée en ce qu'**elle comprend :
- au moins un sucre non réducteur,
- au moins un catalyseur de déshydratation du sucre non réducteur,
- au moins une amine,
- et au moins un composé à insaturation(s) éthylénique(s) activée(s).

2. Composition selon la revendication 1, **caractérisée en ce que** le sucre non réducteur est un oligoholoside renfermant au plus 10 motifs saccharidiques.

3. Composition selon la revendication 2, **caractérisée en ce que** le sucre non réducteur est un di-, tri-, tétra- ou pentaholoside.

4. Composition selon l'une des revendications 1 à 3, **caractérisée en ce que** le sucre non réducteur est le tréhalose, les isotréhaloses, le saccharose, le mélézitose, le gentianose, le raffinose, l'erlose, l'umbelliférose, le stachyose ou le verbascose, de préférence le saccharose.

5. Composition selon l'une des revendications 1 à 4, **caractérisée en ce que** le catalyseur de déshydratation est un sel métallique d'acide inorganique, un sel d'ammonium d'acide inorganique ou un mélange de ces sels.

6. Composition selon la revendication 5, **caractérisée en ce que** le sel métallique d'acide inorganique est un sel de métal alcalin, de métal alcalino-terreux, de métal de transition ou de métal pauvre d'acide inorganique.

7. Composition selon la revendication 6, **caractérisée en ce que** le sel métallique d'acide inorganique est un sel de sodium, de magnésium, de fer, de cobalt, de nickel, de cuivre, de zinc ou d'aluminium, avantageusement de cuivre, de fer" ou d'aluminium.

8. Composition selon la revendication 6 ou 7, **caractérisée en ce que** le sel métallique est choisi parmi les sulfates, les chlorures, les nitrates, les phosphates et les carbonates, et de préférence les sulfates et les chlorures.

9. Composition selon la revendication 5, **caractérisée en ce que** le sel d'ammonium d'acide inorganique est un sulfate d'ammonium, un phosphate d'ammonium, un nitrate d'ammonium ou un carbonate d'ammonium, de préférence un sulfate ou un phosphate d'ammonium.

10. Composition selon la revendication 9, **caractérisée en ce que** le sel d'ammonium est le sulfate d'ammonium ou le phosphate diammonique.

11. Composition selon l'une des revendications 1 à 10, **caractérisée en ce que** la quantité de catalyseur de déshydratation du sucre non réducteur représente 1 à 30 % du poids du sucre non réducteur, de préférence 5 à 25 %, et avantageusement 10 à 20 %.

12. Composition selon l'une des revendications 1 à 11, **caractérisée en ce que** l'amine répond à la formule (I) suivante
R-A-NHR₁ (I)
dans laquelle
R est égal à H, OH, NHR₁ ou -NR₁,
A représente un groupement alkylène, arylalkylène, arylène ou alkylarylène, éventuellement ramifié, un groupement -CO- ou un groupement de formule (II) suivante : 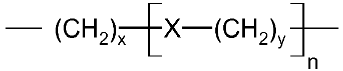 dans laquelle
X est égal à -O- ou -NR₂-
avec R₂ est égal à H, -(CH₂)_{z}-NH₂ ou un groupement bivalent -(CH₂)ₜ- qui forme avec un atome d'azote voisin un cycle à 6 atomes,
x, y, z et t varient de 1 à 5, de préférence x = y = z = t = 2
n est égal à 1, 2, 3 ou 4,
R₁ est un atome d'hydrogène ou un groupement hydroxyalkyle en C₁ - C₅, de préférence hydroxyéthyle.

13. Composition selon la revendication 12, **caractérisée en ce que** l'amine est la monoéthanolamine, la diéthanolamine, l'urée, la diéthylènetriamine (DETA), la triéthylènetétramine (TETA), la tétraéthylènepentamine (TEPA), la pentaéthylènehexamine (PEHA), l'aminoéthyltriéthylènetetramine (AETETA), la N"-(aminoéthyl)-tétraéthylènepentamine et la N'-(aminoéthyl)tétraéthylènepentamine (AETEPA), la bis-(pipérazine)éthylène (BISPIP), l'aminoéthylpipérazine-éthyléthylènediamine (AEPEEDA), la pipérazinéthyldiéthylènetriamine (PEDETA), l'aminoéthyl-pipérazinéthyldiéthylènetriamine (AEPEDETA), la pipérazinéthyltriéthylène-tétramine (PETETA), la tris-(aminoéthyl)-aminoéthylpipérazine (TRISAEAEP) et la pipérazinéthylaminoéthyl-diéthylènetriamine (PEAEDETA).

14. Composition selon la revendication 13, **caractérisée en ce que** l'amine est l'urée, la diéthylènetriamine (DETA), la triéthylènetétramine (TETA), la tétraéthylènepentamine (TEPA) et les mélanges d'amines susmentionnées dans lesquels la TEPA est majoritaire, et avantageusement la TEPA et les mélanges précités.

15. Composition selon l'une des revendications 1 à 14, **caractérisée en ce que** le composé à insaturation(s) éthylénique(s) activée(s) répond à la formule (IV) suivante : 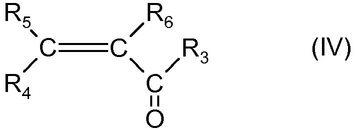 dans laquelle
R₃ représente un atome d'hydrogène, un groupement alkyle en C₁-C₅, de préférence en C₁-C₂, un groupement hydroxyle ou un groupement alcoxy en C₁-C₅, de préférence en C₁-C₂,
R₄ et R₅, identiques ou différents, représentent un atome d'hydrogène, un groupement alkyle en C₁-C₅, de préférence en C₁-C₂, ou un groupement -CO-R₃,
R₆ représente un atome d'hydrogène ou une chaîne hydrocarbonée pouvant renfermer un ou plusieurs hétéroatomes, notamment O, S, N et P, en particulier un radical carboxyalkylène en C₂-C₅, de préférence C₂.

16. Composition selon la revendication 15, **caractérisée en ce qu'**il s'agit de l'acide acrylique, l'acide méthacrylique, l'acide crotonique, l'acide fumarique, l'acide maléique, l'acide citraconique, l'acide itaconique et des anhydrides de ces acides.

17. Composition selon l'une des revendications 1 à 16, **caractérisée en ce que** la quantité d'amine dans la composition est telle que le rapport molaire du composé à insaturation(s) éthylénique(s) activée(s) à l'amine varie de 1 à 3,5, de préférence 1,5 à 3 et avantageusement 2 à 2,5.

18. Composition selon l'une des revendications 1 à 17, **caractérisée en ce que** la quantité de composé à insaturation(s) éthylénique(s) activée(s) dans la composition est telle que le rapport molaire du composé à insaturation(s) éthylénique(s) activée(s) à la somme des motifs saccharidiques constitutifs du sucre non réducteur varie de 0,05 à 1,5, de préférence 0,1 à 1,3, et avantageusement 0,2 à 1,1.

19. Composition selon l'une des revendications 1 à 18, **caractérisée en ce qu'**elle comprend en outre les additifs ci-après dans les proportions suivantes calculées sur la base de 100 parts en poids de sucre non réducteur, de catalyseur de déshydratation du sucre non réducteur, d'amine et de composé à insaturation(s) éthylénique(s) activée(s) :
- 0 à 2 parts de silane, en particulier un aminosilane,
- 0 à 20 parts d'huile, de préférence 4 à 15 parts,
- 0 à 5 parts d'un silicone,
- 0 à 30 parts d'un « extendeur ».

20. Produit à base de fibres encollées à l'aide de la composition d'encollage selon l'une des revendications 1 à 19.

21. Produit selon la revendication 20, **caractérisé en ce que** les fibres sont constituées de fibres minérales et/ou de fibres organiques.

22. Produit selon la revendication 20 ou 21, **caractérisé en ce que** les fibres minérales sont des fibres de verre, notamment de verre E, C, R ou AR (alcali-résistant), des fibres de roche, notamment de basalte, des fibres renfermant plus de 96 % en poids de silice ou des fibres de céramique à base d'au moins un oxyde, un nitrure ou un carbure de métal ou de métalloïde ou un mélange de ces composés.

23. Produit selon l'une des revendications 20 ou 21, **caractérisé en ce que** les fibres organiques sont des fibres synthétiques, par exemple à base d'une oléfine telle que le polyéthylène et le polypropylène, d'un polytéréphtalate d'alkylène tel que le polytéréphtalate d'éthylène, ou d'un polyester, ou des fibres naturelles, par exemple des fibres végétales telles que les fibres bois, de cellulose, de coton, de noix de coco, de sisal, de chanvre ou de lin, et les fibres animales telles que la laine.

24. Produit selon l'une des revendications 20 à 22, **caractérisé en ce qu'**il s'agit d'un produit isolant acoustique et/ou thermique à base laine minérale.

25. Produit selon l'une des revendications 20 à 22, **caractérisé en ce qu'**il s'agit d'un voile de fibres minérales.

26. Procédé de fabrication d'un produit isolant acoustique et/ou thermique selon la revendication 24 ou d'un voile selon la revendication 25, selon lequel on fabrique la laine minérale ou les fibres minérales, on applique sur ladite laine ou lesdites fibres une composition d'encollage et on traite ladite laine ou lesdites fibres à une température permettant la réticulation de l'encollage et la formation d'un liant infusible, **caractérisé en ce qu'**on utilise la composition d'encollage selon l'une des revendications 1 à 19.

## Patentansprüche

1. Formaldehydfreie Schlichtungszusammensetzung für Fasern, insbesondere Mineralfasern, **dadurch gekennzeichnet, dass** sie umfasst:
- mindestens einen nicht reduzierenden Zucker,
- mindestens einen Dehydratisierungskatalysator des nicht reduzierenden Zuckers,
- mindestens ein Amin,
- und mindestens eine Verbindung mit aktivierter/n ethylenischer/n Ungesättigtheit/en.

2. Zusammensetzung nach Anspruch 1, **dadurch gekennzeichnet, dass** der nicht reduzierende Zucker ein Oligoholosid ist, das höchstens 10 Saccharid-Einheiten enthält.

3. Zusammensetzung nach Anspruch 2, **dadurch gekennzeichnet, dass** der nicht reduzierende Zucker ein Di-, Tri-, Tetra- oder Pentaholosid ist.

4. Zusammensetzung nach einem der Ansprüche 1 bis 3, **dadurch gekennzeichnet, dass** der nicht reduzierende Zucker Trehalose, Isotrehalosen, Saccharose, Melezitose, Gentianose, Raffinose, Erlose, Umbelliferose, Stachyose oder Verbascose, vorzugsweise Saccharose, ist.

5. Zusammensetzung nach einem der Ansprüche 1 bis 4, **dadurch gekennzeichnet, dass** der Dehydratisierungskatalysator ein Metallsalz einer anorganischen Säure, ein Ammoniumsalz einer anorganischen Säure oder ein Gemisch dieser Salze ist.

6. Zusammensetzung nach Anspruch 5, **dadurch gekennzeichnet, dass** das Metallsalz einer anorganischen Säure ein Alkalimetall-, Erdalkalimetall-, Übergangsmetall- oder mageres Metallsalz einer anorganischen Säure ist.

7. Zusammensetzung nach Anspruch 6, **dadurch gekennzeichnet, dass** das Metallsalz einer anorganischen Säure ein Natrium-, Magnesium-, Eisen-, Cobalt-, Nickel-, Kupfer-, Zink- oder Aluminium, vorzugsweise Kupfer-, Eisen"- oder Aluminiumsalz ist.

8. Zusammensetzung nach Anspruch 6 oder 7, **dadurch gekennzeichnet, dass** das Metallsalz aus Sulfaten, Chloriden, Nitraten, Phosphaten und Carbonaten und vorzugsweise Sulfaten und Chloriden ausgewählt ist.

9. Zusammensetzung nach Anspruch 5, **dadurch gekennzeichnet, dass** das Ammoniumsalz einer anorganischen Säure ein Ammoniumsulfat, ein Ammoniumphosphat, ein Ammoniumnitrat oder ein Ammoniumcarbonat, vorzugsweise ein Ammoniumsulfat oder - phosphat, ist.

10. Zusammensetzung nach Anspruch 9, **dadurch gekennzeichnet, dass** das Ammoniumsalz das Ammoniumsulfat oder das Diammoniumphosphat ist.

11. Zusammensetzung nach einem der Ansprüche 1 bis 10, **dadurch gekennzeichnet, dass** die Menge des Dehydratisierungskatalysators des nicht reduzierenden Zuckers 1 bis 30 % des Gewichts des nicht reduzierenden Zuckers, vorzugsweise 5 bis 25 % und in vorteilhafter Weise 10 bis 20 %, darstellt.

12. Zusammensetzung nach einem der Ansprüche 1 bis 11, **dadurch gekennzeichnet, dass das** Amin der folgenden Formel (I) entspricht
R-A-NHR₁ (I)
wobei
R gleich H, OH, NHR₁ oder -NR₁ ist,
A für eine Alkylen-, Arylalkylen-, Arylen- oder Alkylarylengruppe, gegebenenfalls verzweigt, eine-CO-Gruppe oder eine Gruppe der folgenden Formel (II) steht: 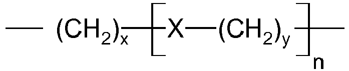 wobei
X gleich -O- oder -NR₂- ist
mit R₂ gleich H, -(CH₂)_{z}-NH₂ oder eine zweiwertige Gruppe -(CH₂)ₜ-, die mit einem benachbarten Stickstoffatom einen Ring mit 6 Atomen bildet,
x, y, z und t von 1 bis 5 variieren, vorzugsweise x = y = z = t = 2
n gleich 1, 2, 3 oder 4 ist,
R₁ ein Wasserstoffatom oder eine C₁-C₅-Hydroxyalkylgruppe, vorzugsweise Hydroxyethyl, ist.

13. Zusammensetzung nach Anspruch 12, **dadurch gekennzeichnet, dass** das Amin Monoethanolamin, Diethanolamin, Harnstoff, Diethylentriamin (DETA), Triethylentetramin (TETA), Tetraethylenpentamin (TEPA), Pentaethylenhexamin (PEHA); Aminoethyltriethylentetramin (AETETA), N"-(Aminoethyl)tetraethylenpentamin und N'-(Aminoethyl)tetraethylenpentamin (AETEPA), Bis-(piperazin)ethylen (BISPIP), Aminoethylpiperazin-ethylethylendiamin (AEPEEDA), Piperazinethyldiethylenetriamin (PEDETA), Aminoethylpiperazinethyldiethylentriamin (AEPEDETA), Piperazinethyltriethylen-Tetramin (PETETA), Tris-(Aminoethyl)-aminoethylpiperazin (TRISAEAEP) und Piperazinethylaminoethyl-diethylentriamin (PEAEDETA) ist.

14. Zusammensetzung nach Anspruch 13, **dadurch gekennzeichnet, dass** das Amin Harnstoff, Diethylentriamin (DETA), Triethylentetramin (TETA), Tetraethylenpentamin (TEPA) und die Gemische vorstehend genannter Amine ist, in denen TEPA vorherrscht, und in vorteilhafter Weise TEPA und die vorstehend genannten Gemische.

15. Zusammensetzung nach einem der Ansprüche 1 bis 14, **dadurch gekennzeichnet, dass** die Verbindung mit aktivierter/n ethylenischer/n Ungesättigtheit/en der folgenden Formel (IV) entspricht: 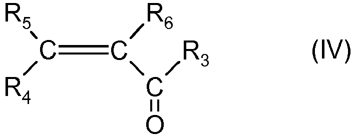 wobei
R₃ für ein Wasserstoffatom, eine C₁-C₅-, vorzugsweise C₁-C₂-Alkylgruppe, eine Hydroxylgruppe oder eine C₁-C₅-, vorzugsweise C₁-C₂-Alkoxygruppe steht,
R₄ und R₅, identisch oder verschieden, für ein Wasserstoffatom, eine C₁-C₅-, vorzugsweise C₁-C₂-Alkylgruppe oder eine -CO-R₃-Gruppe stehen,
R₆ für ein Wasserstoffatom oder eine Kohlenwasserstoffkette steht, die ein oder mehrere Heteroatome enthalten kann, insbesondere O, S, N und P, vor allem ein C₂-C₅-, vorzugsweise C₂-Carboxyalkylenradikal.

16. Zusammensetzung nach Anspruch 15, **dadurch gekennzeichnet, dass** es sich um Acrylsäure, Methacrylsäure, Crotonsäure, Fumarsäure, Maleinsäure, Citraconsäure, Itaconsäure und Anhydride dieser Säuren handelt.

17. Zusammensetzung nach einem der Ansprüche 1 bis 16, **dadurch gekennzeichnet, dass** die Menge an Amin in der Zusammensetzung derart ist, dass das Molverhältnis der Verbindung mit aktivierter/n ethylenischer/n Ungesättigtheit/en zu Amin von 1 bis 3,5, vorzugsweise 1,5 bis 3 und in vorteilhafter Weise 2 bis 2,5 variiert.

18. Zusammensetzung nach einem der Ansprüche 1 bis 17, **dadurch gekennzeichnet, dass** die Menge von Verbindung mit aktivierter/n ethylenischer/n Ungesättigtheit/en in der Zusammensetzung derart ist, dass das Molverhältnis der Verbindung mit aktivierter/n ethylenischer/n Ungesättigtheit/en zu der Summe der Saccharid-Einheiten, aus denen der nicht reduzierende Zucker besteht, von 0,05 bis 1,5, vorzugsweise 0,1 bis 1,3 und in vorteilhafter Weise 0,2 bis 1,1 variiert.

19. Zusammensetzung nach einem der Ansprüche 1 bis 18, **dadurch gekennzeichnet, dass** sie ferner die nachstehenden Additive in den folgenden Anteilen umfasst, berechnet auf der Basis von 100 Gewichtsteilen von nicht reduzierendem Zucker, von Dehydratisierungskatalysator des nicht reduzierenden Zuckers, von Amin und von Verbindung mit aktivierter/n ethylenischer/n Ungesättigtheit/en:
- 0 bis 2 Teile Silan, insbesondere ein Aminosilan,
- 0 bis 20 Teile Öl, vorzugsweise 4 bis 15 Teile,
- 0 bis 5 Teile eines Silikons,
- 0 bis 30 Teile eines "Streckmittels".

20. Produkt auf Basis von Fasern, verleimt mithilfe der Schlichtungszusammensetzung nach einem der Ansprüche 1 bis 19.

21. Produkt nach Anspruch 20, **dadurch gekennzeichnet, dass** die Fasern aus mineralischen und/oder organischen Fasern bestehen.

22. Produkt nach Anspruch 20 oder 21, **dadurch gekennzeichnet, dass** die Mineralfasern Glasfasern, insbesondere (alkalibeständige) E, C, R oder AR Glasfasern, Steinfasern, insbesondere Basaltfasern, Fasern, die mehr als 96 Gew.-% Siliciumdioxid oder Keramikfasern auf der Basis von mindestens einem Oxid, Nitrid oder Carbid eines Metalls oder Halbmetalls oder eines Gemischs dieser Verbindungen enthalten, sind.

23. Produkt nach einem der Ansprüche 20 oder 21, **dadurch gekennzeichnet, dass** die organischen Fasern synthetische Fasern sind, beispielsweise basierend auf einem Olefin wie Polyethylen und Polypropylen, auf einem Polyalkylenterephthalat wie Polyethylenterephthalat oder auf einem Polyester oder Naturfasern, beispielsweise Pflanzenfasern wie Holz, Zellulose, Baumwolle, Kokosnuss, Sisal, Hanf oder Flachsfasern und Tierfasern wie Wolle.

24. Produkt nach einem der Ansprüche 20 bis 22, **dadurch gekennzeichnet, dass** es sich um ein schall- und/oder wärmedämmendes Produkt auf Mineralwollebasis handelt.

25. Produkt nach einem der Ansprüche 20 bis 22, **dadurch gekennzeichnet, dass** es sich um ein Mineralfaservlies handelt.

26. Verfahren zur Herstellung eines schall- und/oder wärmedämmenden Produkts nach Anspruch 24 oder eines Vlieses nach Anspruch 25, gemäß dem die Mineralwolle oder die Mineralfasern hergestellt werden, auf die Wolle oder die Fasern eine Schlichtungszusammensetzung aufgetragen wird und die Wolle oder die Fasern bei einer Temperatur behandelt werden, die eine Vernetzung der Schlichte und die Bildung eines nicht schmelzbaren Bindemittels erlaubt, **dadurch gekennzeichnet, dass** die Schlichtungszusammensetzung nach einem der Ansprüche 1 bis 19 verwendet wird.

## Claims

1. Formaldehyde-free sizing composition for fibres, in particular mineral fibres, **characterized in that** it comprises:
- at least one non-reducing sugar,
- at least one catalyst for the dehydration of the non-reducing sugar,
- at least one amine,
- and at least one compound comprising activated ethylenic unsaturation(s).

2. Composition according to Claim 1, **characterized in that** the non-reducing sugar is an oligosaccharide including at most 10 saccharide units.

3. Composition according to Claim 2, **characterized in that** the non-reducing sugar is a di-, tri-, tetra- or pentasaccharide.

4. Composition according to one of Claims 1 to 3, **characterized in that** the non-reducing sugar is trehalose, isotrehaloses, sucrose, melezitose, gentianose, raffinose, erlose, umbelliferose, stachyose or verbascose, preferably sucrose.

5. Composition according to one of Claims 1 to 4, **characterized in that** the dehydration catalyst is an inorganic acid metal salt, an inorganic acid ammonium salt or a mixture of these salts.

6. Composition according to Claim 5, **characterized in that** the inorganic acid metal salt is an inorganic acid alkali metal, alkaline earth metal, transition metal or poor metal salt.

7. Composition according to Claim 6, **characterized in that** the inorganic acid metal salt is a sodium, magnesium, iron, cobalt, nickel, copper, zinc or aluminium salt, advantageously a copper, iron(II) or aluminium salt.

8. Composition according to Claim 6 or 7, **characterized in that** the metal salt is chosen from sulphates, chlorides, nitrates, phosphates and carbonates and preferably sulphates and chlorides.

9. Composition according to Claim 5, **characterized in that** the inorganic acid ammonium salt is an ammonium sulphate, an ammonium phosphate, an ammonium nitrate or an ammonium carbonate, preferably an ammonium sulphate or an ammonium phosphate.

10. Composition according to Claim 9, **characterized in that** the ammonium salt is ammonium sulphate or diammonium phosphate.

11. Composition according to one of Claims 1 to 10, **characterized in that** the amount of catalyst for the dehydration of the non-reducing sugar represents from 1 to 30% of the weight of the non-reducing sugar, preferably from 5 to 25% and advantageously from 10 to 20%.

12. Composition according to one of Claims 1 to 11, **characterized in that** the amine corresponds to the following formula (I):
R-A-NHR₁ (I)
in which:
R is equal to H, OH, NHR₁ or -NR₁,
A represents alkylene, arylalkylene, arylene or alkylarylene group, an optionally branched alkylene, arylalkylene, arylene or alkylarylene group, or a -CO-group or a group of following formula (II): 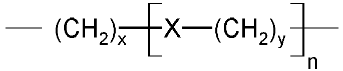 in which:
X is equal to -O- or -NR₂-
with R₂ equal to H, -(CH₂)_{z}-NH₂ or a divalent -(CH₂)ₜ- group which forms, with a neighbouring nitrogen atom, a ring comprising 6 atoms,
x, y, z and t vary from 1 to 5, preferably x = y = z = t = 2,
n is equal to 1, 2, 3 or 4,
R₁ is a hydrogen atom or a C₁ to C₅ hydroxyalkyl group, preferably a hydroxyethyl group.

13. Composition according to Claim 12, **characterized in that** the amine is monoethanolamine, diethanolamine, urea, diethylenetriamine (DETA), triethylenetetramine (TETA), tetraethylenepentamine (TEPA), pentaethylenehexamine (PEHA), aminoethyltriethylenetetramine (AETETA), N"-(aminoethyl)tetraethylenepentamine and N'-(aminoethyl)tetraethylenepentamine (AETEPA), bis(piperazine)ethylene (BISPIP), aminoethylpiperazinyl-ethylethylenediamine (AEPEEDA), piperazinylethyldiethylenetriamine (PEDETA), aminoethylpiperazinylethyldiethylenetriamine (AEPEDETA), piperazinylethyltriethylenetetramine (PETETA), tris(aminoethyl)aminoethylpiperazine (TRISAEAEP) and piperazinylethylamino-ethyldiethylenetriamine (PEAEDETA).

14. Composition according to Claim 13, **characterized in that** the amine is urea, diethylenetriamine (DETA), triethylenetetramine (TETA), tetraethylenepentamine (TEPA) and the mixtures of abovementioned amines in which TEPA is predominant, and advantageously TEPA and the abovementioned mixtures.

15. Composition according to one of Claims 1 to 14, **characterized in that** the compound comprising activated ethylenic unsaturation(s) corresponds to the following formula (IV): 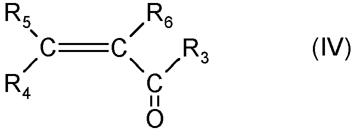 in which:
R₃ represents a hydrogen atom, a C₁-C₅, preferably C₁-C₂, alkyl group, a hydroxyl group or a C₁-C₅, preferably C₁-C₂, alkoxy group,
R₄ and R₅, which are identical or different, represent a hydrogen atom, a C₁-C₅, preferably C₁-C₂, alkyl group or a -CO-R₃ group,
R₆ represents a hydrogen atom or a hydrocarbon chain which can include one or more heteroatoms, in particular O, S, N and P, especially a C₂-C₅ carboxyalkylene radical, preferably a C₂ carboxyalkylene radical.

16. Composition according to Claim 15, **characterized in that** it concerns acrylic acid, methacrylic acid, crotonic acid, fumaric acid, maleic acid, citraconic acid, itaconic acid and the anhydrides of these acids.

17. Composition according to one of Claims 1 to 16, **characterized in that** the amount of amine in the composition is such that the molar ratio of the compound comprising activated ethylenic unsaturation(s) to the amine varies from 1 to 3.5, preferably from 1.5 to 3 and advantageously from 2 to 2.5.

18. Composition according to one of Claims 1 to 17, **characterized in that** the amount of compound comprising activated ethylenic unsaturation(s) in the composition is such that the molar ratio of the compound comprising activated ethylenic unsaturation(s) to the sum of the constituent saccharide units of the non-reducing sugar varies from 0.05 to 1.5, preferably from 0.1 to 1.3 and advantageously from 0.2 to 1.1.

19. Composition according to one of Claims 1 to 18, **characterized in that** it additionally comprises the additives below in the following proportions, calculated on the basis of 100 parts by weight of non-reducing sugar, catalyst for the dehydration of the non-reducing sugar, amine and compound comprising activated ethylenic unsaturation(s):
- from 0 to 2 parts of silane, in particular an aminosilane,
- from 0 to 20 parts of oil, preferably from 4 to 15 parts,
- from 0 to 5 parts of a silicone,
- from 0 to 30 parts of an "extender".

20. Product based on fibres sized using the sizing composition according to one of Claims 1 to 19.

21. Product according to Claim 20, **characterized in that** the fibres are composed of mineral fibres and/or of organic fibres.

22. Product according to Claim 20 or 21, **characterized in that** the mineral fibres are glass fibres, in particular fibres of E, C, R or AR (alkali-resistant) glass, rock fibres, in particular of basalt, fibres including more than 96% by weight of silica or ceramic fibres based on at least one oxide, nitride or carbide of metal or semimetal or a mixture of these compounds.

23. Product according to either of Claims 20 and 21, **characterized in that** the organic fibres are synthetic fibres, for example based on an olefin, such as polyethylene and polypropylene, on a polyalkylene terephthalate, such as polyethylene terephthalate, or on a polyester, or natural fibres, for example plant fibres, such as fibres of wood, cellulose, cotton, coconut, sisal, hemp or flax, and animal fibres, such as wool.

24. Product according to one of Claims 20 to 22, **characterized in that** it is an acoustic and/or thermal insulating product based on mineral wool.

25. Product according to one of Claims 20 to 22, **characterized in that** it is a veil of mineral fibres.

26. Process for the manufacture of an acoustic and/or thermal insulating product according to Claim 24 or of a veil according to Claim 25, according to which the mineral wool or the mineral fibres is/are manufactured, a sizing composition is applied to the said wool or the said fibres and the said wool or the said fibres is/are treated at a temperature which makes possible the crosslinking of the size and the formation of an infusible binder, **characterized in that** use is made of the sizing composition according to one of Claims 1 to 19.
